(19) Europäisches Patentamt / European Patent Office / Office européen des brevets

(11) **EP 4 562 593 B1**

(12) **FASCICULE DE BREVET EUROPEEN**

(45) Date de publication et mention de la délivrance du brevet:
**08.04.2026 Bulletin 2026/15**

(21) Numéro de dépôt: **23776078.0**

(22) Date de dépôt: **26.07.2023**

(51) Classification Internationale des Brevets (IPC):
**G06T 5/50** *(2006.01)*  **G06T 5/73** *(2024.01)*
**G03H 1/08** *(2006.01)*  **G03H 1/00** *(2006.01)*
**G03H 1/04** *(2006.01)*

(52) Classification Coopérative des Brevets (CPC):
**G06T 5/73; G06T 5/50;** G03H 1/0866;
G03H 2001/005; G03H 2001/0447;
G03H 2001/0883; G03H 2210/454

(86) Numéro de dépôt international:
**PCT/FR2023/051182**

(87) Numéro de publication internationale:
**WO 2024/023454 (01.02.2024 Gazette 2024/05)**

(54) **DISPOSITIF DE DETECTION DE PARTICULES EN IMAGERIE SANS LENTILLE**

VORRICHTUNG ZUR DETEKTION VON TEILCHEN IN LINSENLOSER BILDGEBUNG

DEVICE FOR DETECTING PARTICLES IN LENS-FREE IMAGING

(84) Etats contractants désignés:
AL AT BE BG CH CY CZ DE DK EE ES FI FR GB
GR HR HU IE IS IT LI LT LU LV MC ME MK MT NL
NO PL PT RO RS SE SI SK SM TR

(30) Priorité: **29.07.2022 FR 2207853**

(43) Date de publication de la demande:
**04.06.2025 Bulletin 2025/23**

(73) Titulaire: **Horiba ABX SAS**
**34790 Grabels (FR)**

(72) Inventeur: **THOUY, Benoît**
**34184 Montpellier Cedex (FR)**

(74) Mandataire: **Plasseraud IP**
**104 Rue de Richelieu**
**CS92104**
**75080 Paris Cedex 02 (FR)**

(56) Documents cités:
**US-A1- 2016 041 094**

• EUAN MCLEOD ET AL: "Unconventional methods of imaging: computational microscopy and compact implementations", REPORTS ON PROGRESS IN PHYSICS, INSTITUTE OF PHYSICS PUBLISHING, BRISTOL, GB, vol. 79, no. 7, 23 May 2016 (2016-05-23), pages 76001, XP020305431, ISSN: 0034-4885, [retrieved on 20160523], DOI: 10.1088/0034-4885/79/7/076001
• HURLEY N ET AL: "Comparing Measures of Sparsity", IEEE TRANSACTIONS ON INFORMATION THEORY, IEEE, USA, vol. 55, no. 10, October 2009 (2009-10-01), pages 4723 - 4741, XP011276617, ISSN: 0018-9448, DOI: 10.1109/TIT.2009.2027527

EP 4 562 593 B1

## Description

L'invention concerne le domaine du traitement d'images d'échantillons, en particulier d'échantillons biologiques, par imagerie sans lentille.

L'imagerie sans lentille consiste à placer un échantillon entre une source de lumière et un capteur d'image sans dispositif de grossissement optique entre l'échantillon et le capteur d'image. Le capteur d'image collecte ainsi une image de l'intensité lumineuse transmise par l'échantillon, également appelée hologramme, qui est formée de figures d'interférence entre d'une part l'onde lumineuse émise par la source de lumière et transmise par l'échantillon, et d'autre part des ondes de diffraction résultant de la diffraction par l'échantillon de l'onde lumineuse émise par la source de lumière.

Ces figures d'interférence ont fait l'objet de recherches afin de reconstruire une image permettant d'exploiter l'information qu'elles contiennent sur l'échantillon observé. Cette technique, de par sa simplicité matérielle liée à l'absence d'optique, est considérée comme particulièrement prometteuse, et a fait l'objet de nombreux développements dans le domaine de l'hématologie.

Le comptage des globules rouges (ci-après "GR") est possible dans le cadre du contrôle de Plasma Riche en Plaquettes (ci-après "PRP"), car le nombre de GR est suffisamment faible pour ne pas masquer les autres particules. Dans le cas du sang total, il est nécessaire de les lyser, et il est alors possible de compter seulement les populations plaquettes (ci-après "PLT") et les globules blancs (ci-après "GB"), avec la difficulté supplémentaire d'avoir un fond bruité par les GR lysés.

Les brevets publiés sous les numéros FR 3 034 196 et FR 3 049 348 enseignent un calcul de statistiques à partir de cellules détectées, notamment à partir de profils en z, pour le comptage et la différenciation des GB. Contrairement à l'état de l'art, ces méthodes nécessitent un prérequis à la reconstruction de l'image à partir de l'image de diffraction avec une méthode précise, propre à conserver l'information locale des particules quasi-ponctuelles et à ne pas laisser d'artefact majeur. À titre d'exemple, le brevet FR 3 049 347 enseigne une telle méthode de reconstruction.

À ce jour, seule la méthode GB-PLT décrite dans le brevet FR 3 082 943 permet de compter les PLT sur PRP et en sang lysé (avec un paramétrage différent), et un travail supplémentaire serait nécessaire pour savoir discriminer les GR (en PRP) des autres particules. Cette méthode repose sur la détection de particules dans une pile d'images reconstruites autour d'un plan moyen ; les plans de détection sont ensuite fusionnés pour établir une carte de détection. Cette carte est directement utilisée pour le comptage des particules. Dans le cas où plusieurs types de particules sont présents, il convient d'adapter cette stratégie générale à chaque type de particule. Sur chaque objet (composante connexe) du masque de détection ainsi calculé, des métriques sont calculées afin de déterminer la nature des objets ou leur nombre. Ce dernier point constitue une limite extrêmement pénalisante : dans le cas d'une image d'un grand nombre de particules, de nombreux multiplets de particules sont présents (statistiquement) et la méthode ne répond pas à ce problème dans le cas ou plusieurs types de particules sont présents. Enfin, les tentatives d'utilisation de cette méthode sur du sang lysé ont été infructueuses.

Une autre méthode a été développée et repose sur un modèle de type réseau de neurones profond ("Deep Neural Network" en anglais ou "DNN"). L'apprentissage a été fait sur une base d'échantillons augmentée pour avoir suffisamment d'entrées, en tenant compte des comptages donnés par une machine de référence. Les performances se sont révélées très bonnes, elles sont limitées par l'hypothèse propre à ce type de méthode : disposer de suffisamment de données d'apprentissage avec une référence suffisamment fiable. L'acquisition de données est un processus long et coûteux, et c'est le facteur limitant pour l'application des technologies à base de DNN. De plus, l'apprentissage est fortement influencé par la machine de référence, ce qui pose problème en regard de la variabilité des machines de mesure. En outre, l'apprentissage étant réalisé sur des images présentant du bruit, il induit donc un apprentissage du bruit de la lyse et pas seulement du comptage et de la classification. Enfin, cet apprentissage permet de réaliser un comptage, mais pas la classification de particules car il n'y a pas de référence constructible.

US 2016/041 094 A1, Lei décrit un microscope sans lentille compact constitué d'une chambre fluide placée directement sur la surface réceptrice de lumière d'un capteur d'image (généralement un CMOS ou un CCD). Une source lumineuse éclaire l'échantillon confiné dans la chambre ; comme la chambre est en contact intime avec le capteur, la lumière ne traverse aucun objectif. Le capteur enregistre soit une image d'ombre (les particules bloquent l'éclairage), soit une image de fluorescence (l'échantillon est excité et la lumière émise est filtrée avant d'atteindre le capteur). Le système comprend un processeur qui analyse l'image capturée à l'aide de critères simples de taille, de forme ou de luminosité afin de compter et éventuellement de classer des particules telles que les globules rouges ou blancs, les plaquettes, les bactéries, etc. Le document indique également que l'ensemble peut être réalisé à faible coût et de façon portable, adapté aux diagnostics de point de soin ou de terrain.

McLeod et al.: "Unconventional methods of imaging: computational microscopy and compact implementations", Reports on Progress in Physics, Institute of Physics Publishing, Bristol, GB, vol. 79, no. 7, 23 mai 2016, page 76001 passe en revue un large éventail de techniques de microscopie computationnelle évitant les lentilles classiques. Il couvre l'imagerie holographique sans lentille sur puce, la super-résolution pixel-par-pixel, la microscopie à ouverture synthétique, la Fourier ptychography, l'illumination structurée, le compressive sensing et les méthodes connexes. Les auteurs expliquent le principe de chaque technique, la physique sous-jacente (diffraction, nombre de Fresnel, cohérence) et la façon dont elles peuvent être implémentées dans du matériel compact et peu coûteux, tel que les smartphones ou des modules capteurs dédiés. Le texte aborde également des aspects pratiques : conception de l'illumination, filtrage de longueur d'onde, détection de fluorescence et utilisation de substrats nanostructurés pour améliorer la sensibilité.

Hurley et al.: "Comparing Measures of Sparsity", IEEE Transactions on Information Theory, IEEE, USA, vol. 55, no. 10, octobre 2009, pages 4723-4741 est une étude théorique sur la façon de quantifier la parcimonie (ou, de façon équivalente, l'inégalité) dans un ensemble de valeurs. Les auteurs introduisent six critères intuitifs : Robin-Hood, Scaling, Rising-Tide, Cloning, Bill-Gates et Babies, qu'une bonne mesure de parcimonie devrait satisfaire. Ils évaluent ensuite un large éventail d'indices de parcimonie existants, parmi lesquels l'indice de Gini, le kurtosis, diverses mesures basées sur les normes 1, ainsi qu'une famille qu'ils nomment « pq-mea n » (définie pour $p < 1$ et $q > 1$). Le pq-mean est montré comme satisfaisant les six critères lorsque les paramètres sont correctement choisis. L'article fournit des démonstrations, des tableaux comparatifs et des illustrations graphiques du comportement des différentes mesures sur des données synthétiques.

Aucune solution n'offre donc pleinement satisfaction pour le comptage de PLT dans le cadre d'une imagerie sans lentille en sang total.

L'invention vient améliorer la situation. À cet effet, elle propose un dispositif de détection de particules en imagerie sans lentille, comprenant une mémoire agencée pour recevoir une pluralité d'images en z obtenues à partir d'une imagerie sans lentille d'un échantillon biologique, un préparateur agencé, à partir desdites images en z, pour déterminer une image de focus dans laquelle chaque pixel est associé d'une part à une image en z et d'autre part à l'intensité de ce pixel dans cette image en z, le préparateur étant agencé pour déterminer l'image en z pour un pixel donné en calculant, pour chacune des images en z et pour le pixel donné, une mesure de parcimonie à partir de l'intensité du pixel donné et des intensités de pixels voisins, et en sélectionnant l'image en z dont la mesure de parcimonie est la plus importante, un sélecteur agencé pour déterminer, pour chaque pixel de l'image de focus, si ce pixel est un maximum dans un voisinage local centré sur ce pixel dans l'image de focus ou dans l'image en z associée à ce pixel dans l'image de focus, et, si c'est le cas, pour stocker ce pixel dans une liste de sites sélectionnés, et un calculateur agencé pour calculer une valeur de métrique pour chaque pixel de la liste de sites sélectionnés basée sur l'intensité de ces pixels pour permettre de produire une image de valeurs de métriques permettant de distinguer les particules associées à chaque pixel de la liste de sites sélectionnés entre elles.

Ce dispositif est particulièrement avantageux car il permet de réaliser un comptage fiable des PLT et embarquable dans un dispositif de laboratoire.

Selon divers modes de réalisation, l'invention peut présenter une ou plusieurs des caractéristiques suivantes :

- le calculateur est agencé pour mettre en œuvre une métrique étant choisie parmi une métrique basée sur la modélisation des intensités d'un voisinage de chaque pixel de la liste de sites sélectionnés dans l'image en z associée à ce pixel dans l'image de focus par une gaussienne, en combinant un ou plusieurs parmi la covariance, la hauteur et le facteur d'excentricité de cette gaussienne, et une métrique basée sur la moyenne des gradients en z de l'intensité des pixels d'un voisinage centré sur chaque pixel de la liste de sites sélectionnés, lequel gradient est évalué pour l'image en z correspondant à chaque pixel de la liste de sites sélectionnés dans l'image de focus,

- le préparateur est agencé pour utiliser une mesure de parcimonie basée sur la moyenne pq où les intensités sont modulées par une fenêtre gaussienne centrée sur le pixel donné,

- le préparateur est agencé pour utiliser une moyenne pq avec p égal à 1/2 et q égal à 3, un voisinage carré de 17 pixels, et une gaussienne d'écart-type égal à 2,5,

- le sélecteur est agencé pour parcourir la liste de sites sélectionnés, et, lorsque deux pixels sont immédiatement voisins, pour conserver celui dont l'intensité associée dans l'image de focus est la plus importante, et

- le dispositif comprend en outre un filtre agencé pour recalculer l'image de focus en recalculant la mesure de parcimonie pour chaque pixel donné en restreignant le voisinage de pixels à des pixels dont l'image en z associée dans l'image de focus est identique à celle associée au pixel donné ou immédiatement voisine en z.

L'invention concerne également un procédé de détection de particules en imagerie sans lentille, comprenant les opérations suivantes :

a) recevoir une pluralité d'images en z obtenues à partir d'une imagerie sans lentille d'un échantillon biologique,

b) déterminer une image de focus dans laquelle chaque pixel est associé d'une part à une image en z et d'autre part à l'intensité de ce pixel dans cette image en z, cette détermination étant réalisée, pour un pixel donné,

b1) en calculant, pour chacune des images en z et pour le pixel donné, une mesure de parcimonie à partir de l'intensité du pixel donné et des intensités de pixels voisins, et

b2) en sélectionnant l'image en z dont la mesure de parcimonie est la plus importante,

c) déterminer, pour chaque pixel de l'image de focus, si ce pixel est un maximum dans un voisinage local centré sur ce pixel dans l'image de focus ou dans l'image en z associée à

ce pixel dans l'image de focus, et, si c'est le cas, pour stocker ce pixel dans une liste de sites sélectionnés, et

d) calculer une valeur de métrique pour chaque pixel de la liste de sites sélectionnés basée sur l'intensité de ces pixels pour permettre de produire une image de valeurs de métriques permettant de distinguer les particules associées à chaque pixel de la liste de sites sélectionnés entre elles.

Selon divers modes de réalisation, l'invention peut présenter une ou plusieurs des caractéristiques suivantes :

- dans l'opération d), la métrique est choisie parmi une métrique basée sur la modélisation des intensités d'un voisinage de chaque pixel de la liste de sites sélectionnés dans l'image en z associée à ce pixel dans l'image de focus par une gaussienne, en combinant un ou plusieurs parmi la covariance, la hauteur et le facteur d'excentricité de cette gaussienne, et une métrique basée sur la moyenne des gradients en z de l'intensité des pixels d'un voisinage centré sur chaque pixel de la liste de sites sélectionnés, lequel gradient est évalué pour l'image en z correspondant à chaque pixel de la liste de sites sélectionnés dans l'image de focus,
- l'opération b1) utilise une mesure de parcimonie basée sur la moyenne pq où les intensités sont modulées par une fenêtre gaussienne centrée sur le pixel donné,
- l'opération b1) utilise comme mesure de parcimonie la moyenne pq avec p égal à 1/2 et q égal à 3, un voisinage carré de 17 pixels, et une gaussienne d'écart-type égal à 2,5,
- l'opération c) comprend parcourir la liste de sites sélectionnés, et, lorsque deux pixels sont immédiatement voisins, pour conserver celui dont l'intensité associée dans l'image de focus est la plus importante, et
- l'opération b) comprend en outre b3) recalculer l'image de focus en recalculant la mesure de parcimonie pour chaque pixel donné en restreignant le voisinage de pixels à des pixels dont l'image en z associée dans l'image de focus est identique à celle associée au pixel donné ou immédiatement voisine en z.

L'invention concerne également un programme informatique comprenant des instructions pour exécuter le procédé selon l'invention, un support de stockage de données sur lequel est enregistré un tel programme informatique et un système informatique comprenant un processeur couplé à une mémoire, la mémoire ayant enregistré un tel programme informatique.

D'autres caractéristiques et avantages de l'invention apparaîtront mieux à la lecture de la description qui suit, tirée d'exemples donnés à titre illustratif et non limitatif, tirés des dessins sur lesquels :

- la figure 1 représente un diagramme générique d'un dispositif selon l'invention,
- la figure 2 représente un exemple de boucle de fonctionnement du dispositif de la figure 1,
- la figure 3 représente un exemple de mise en œuvre d'une fonction mise en œuvre dans une première opération de la figure 2,
- la figure 4 représente un exemple de mise en œuvre d'une fonction mise en œuvre dans une deuxième opération de la figure 2,
- la figure 5 représente un exemple de mise en œuvre d'une fonction mise en œuvre dans une troisième opération de la figure 2,
- la figure 6 représente une image sans lentille, et des images en z qui en sont tirées,
- la figure 7 représente une image de focus obtenue par la fonction de la figure 3,
- la figure 8 représente une image de focus obtenue par la fonction de la figure 4,
- la figure 9 représente une image de focus obtenue par la fonction de la figure 5,
- la figure 10 représente une image de valeurs de première métrique obtenue à partir d'une image obtenue par la fonction de la figure 5, et
- la figure 11 représente une image de valeurs de deuxième métrique obtenue à partir d'une image obtenue par la fonction de la figure 5.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

La présente description est de nature à faire intervenir des éléments susceptibles de protection par le droit d'auteur et/ou le copyright. Le titulaire des droits n'a pas d'objection à la reproduction à l'identique par quiconque du présent document de brevet ou de sa description, telle qu'elle apparaît dans les dossiers officiels. Pour le reste, il réserve intégralement ses droits.

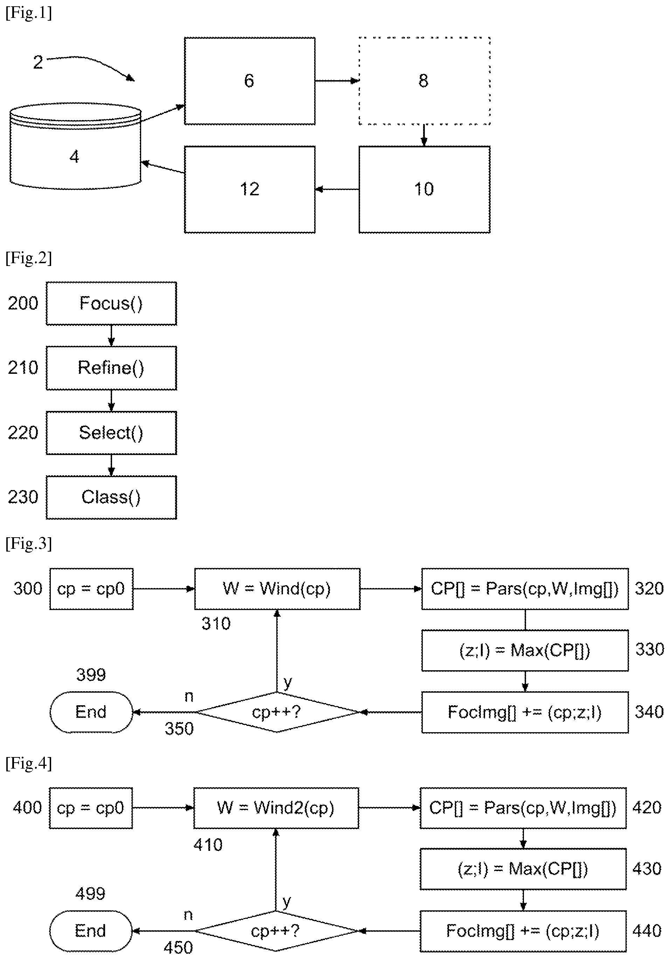

La figure 1 représente un diagramme générique d'un dispositif 2 selon l'invention. Le dispositif 2 comprend une mémoire 4, un préparateur 6, un filtre 8, un sélecteur 10 et un calculateur 12. Comme on le verra plus bas, le filtre 8 est optionnel.

La mémoire 4 reçoit les données qui font l'objet des fonctions et calculs mis en œuvre par le dispositif 2. Le dispositif 2 traite principalement des images reconstruites dont le focus est pris à diverses profondeurs, obtenues à partir d'une imagerie sans lentille. Le brevet publié sous le numéro FR 3 082 944 décrit un exemple de mise en œuvre de ce type d'images. Plus précisément, ce brevet décrit comment, à partir d'une imagerie sans lentille, une pluralité d'images qui seront plus bas appelées "images en z" ou "images de focus en z" sont reconstruites et correspondent à une focalisation de l'imagerie sans lentille à une profondeur particulière.

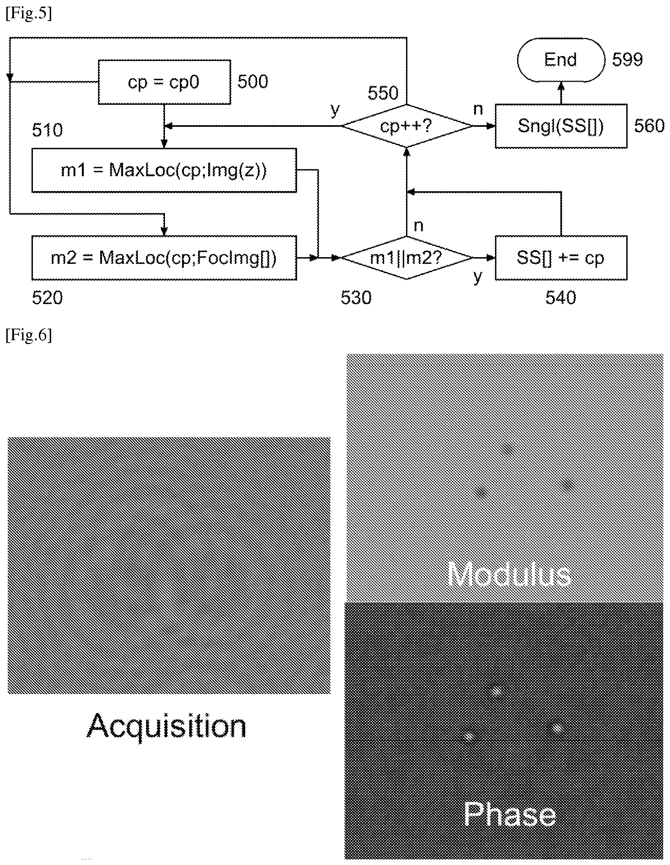

La figure 6 montre une image d'acquisition issue de l'imagerie sans lentille, et des images du module et de la phase qui sont reconstruites à partir de l'image d'acquisition. Comme on le verra plus bas, ce sont des images qui combinent le module et la phase qui sont utilisées comme images en z dans le cadre de l'invention. En variante, seule l'image de la phase ou seule l'image de module pourrait être utilisée lorsqu'elle porte l'information d'intérêt.

La difficulté du traitement de ces images réside dans le fait que les plaquettes constituent des éléments dont la taille est de l'ordre du pixel, dont le nombre est très élevé, le tout dans une image dont le fond est très bruité du fait de la lyse des GR, ce qui rend impossible une différenciation à l'œil nu entre les PLT d'une part et les débris de GR d'autre part. Les données des images en z comprennent d'une part des pixels identifiés par leurs coordonnées, et d'autre part une valeur d'intensité associée à ces pixels. Dans l'exemple décrit ici, les images présentent une résolution de 3840x2748 pixels, et l'intensité est modifiée : l'image en z est traitée sous la forme |I-1| au lieu de |I| car l'image sans particule après reconstruction doit avoir théoriquement une valeur constante à 1. Ainsi, en travaillant sur |I-1| on considère l'amplitude de la perturbation induite localement par la diffraction.

La mémoire 4 peut être tout type de stockage de données propre à recevoir des données numériques : disque dur, disque dur à mémoire flash, mémoire flash sous toute forme, mémoire vive, disque magnétique, stockage distribué localement ou dans le cloud, etc.

Dans l'exemple décrit ici, la mémoire 4 reçoit toutes les données décrites ci-dessus, et plus généralement toutes les données qui concernent le dispositif 2, c'est-à-dire les programmes et logiciels instanciant le préparateur 6, le filtre 8, le sélecteur 10 et le calculateur 12, leurs paramètres, les données reçues en entrée, les données en sortie, ainsi que les données stockées en mémoire tampon. Les données calculées par le dispositif peuvent être stockées sur tout type de mémoire similaire à la mémoire 4, ou sur celle-ci. Ces données peuvent être effacées après que le dispositif a effectué ses tâches ou conservées.

Le préparateur 6, le filtre 8, le sélecteur 10 et le calculateur 12 accèdent directement ou indirectement à la mémoire 4. Ils peuvent être réalisés sous la forme d'un code informatique approprié exécuté sur un ou plusieurs processeurs. Par processeurs, il doit être compris tout processeur adapté aux calculs décrits plus bas. Un tel processeur peut être réalisé de toute manière connue, sous la forme d'un microprocesseur pour ordinateur personnel, portable, tablette ou smartphone, d'une puce dédiée de type FPGA ou SoC, d'une ressource de calcul sur une grille ou dans le cloud, d'une grappe de processeurs graphiques (GPUs), d'un microcontrôleur, ou de toute autre forme propre à fournir la puissance de calcul nécessaire à la réalisation décrite plus bas. Un ou plusieurs de ces éléments peuvent également être réalisés sous la forme de circuits électroniques spécialisés tel un ASIC. Une combinaison de processeur et de circuits électroniques peut également être envisagée. Des processeurs dédiés à l'apprentissage automatique pourront aussi être envisagés.

Le préparateur 6, le filtre 8, le sélecteur 10 et le calculateur 12 sont présentés ici séparément car ils réalisent des fonctions distinctes. Cette description modulaire vise à mieux faire comprendre les blocs fonctionnels mis en œuvre par le dispositif 2. Il va de soi que deux ou plus de ces éléments pourraient néanmoins être regroupés dès lors que les relations fonctionnelles restent comparables.

La figure 2 représente un exemple de boucle de fonctionnement du dispositif de la figure 1 permettant de mieux comprendre les fonctions respectives du préparateur 6, du filtre 8, du sélecteur 10 et du calculateur 12.

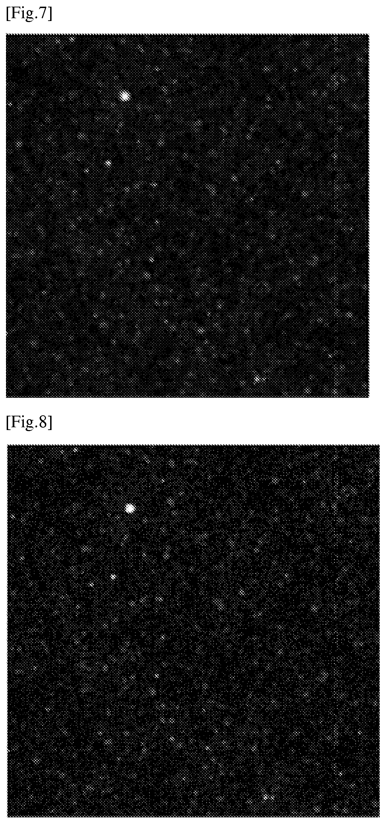

La boucle commence dans une opération 200 dans laquelle le préparateur 6 exécute une fonction Focus(). La fonction Focus() accède aux images en z issues d'une même imagerie sans lentille, et retourne une image appelée image de focus, dans laquelle pour chaque pixel sont associés d'une part un indice d'image en z et d'autre part l'intensité de ce pixel dans cette image en z. Le but de la fonction Focus() est d'identifier, pour chaque pixel, quelle est la meilleure profondeur de focus, afin de trouver le plan le plus pertinent pour déduire la nature de chaque pixel. Cette fonction sera décrite plus avant avec la figure 3. La figure 7 montre un exemple d'image de focus obtenue.

Ensuite, l'image de focus est retraitée dans une opération 210 optionnelle dans laquelle le filtre 8 exécute une fonction Refine(). Comme le verra plus bas, la fonction Focus() utilise une mesure de parcimonie couplée à une fenêtre gaussienne, ce qui permet d'avoir une image de focus de bonne qualité et tout en préservant une certaine régularité, sans quoi les pixels d'une même cellule ne sont pas forcément au même focus. Cependant, dans le cadre de la détection de plaquettes cette régularité a un prix. En effet, à cause du grand nombre de cellules présentes dans la chambre, la distance entre deux cellules peut être très réduite, et une cellule peut facilement se trouver dans la fenêtre de voisinage et perturber la mesure de parcimonie. La fenêtre gaussienne réduit ce phénomène, mais si deux cellules sont distantes de quelques pixels, la plus "intense" prendra le pas sur l'autre et la moins "intense" aura probablement un focus non optimal. La fonction Refine() vise à résoudre ce problème en venant raffiner l'image de focus à partir des plans de focalisation trouvés à l'opération 200, et en ne tenant compte pour la mesure de parcimonie de chaque pixel que des pixels dans des plans identiques ou très proches. Cette fonction sera décrite plus avant avec la figure 4. La figure 8 montre un exemple d'image de focus raffinée.

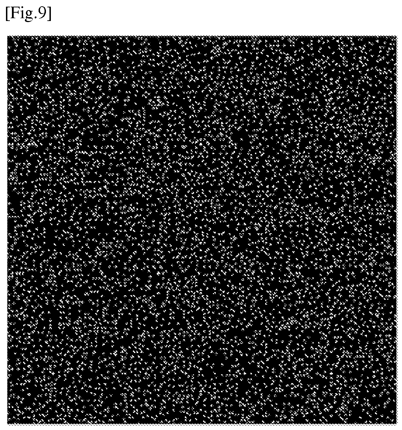

Le sélecteur 10 utilise alors l'image de focus - éventuellement raffinée - pour choisir les pixels qui forment des sites vraisemblables de plaquettes. Pour cela, le sélecteur 10 exécute une fonction Selec() dans une opération 220. Cette fonction favorise une détection pixellique et non par composante connexe, afin de pouvoir traiter au mieux les cas de multiplets le plus simplement possible. L'important est de ne pas "oublier" de sites, et de considérer les objets à chercher comme des uniques pixels, afin de reléguer l'opération de distinction entre pixels d'objets (plaquettes) et pixels de fond à l'opération finale. Cette fonction sera décrite plus avant avec la figure 5. La figure 9 montre un exemple d'image de sites obtenue.

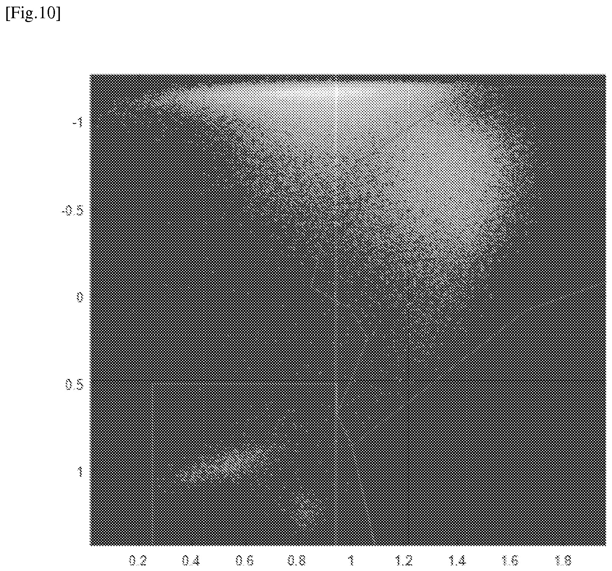

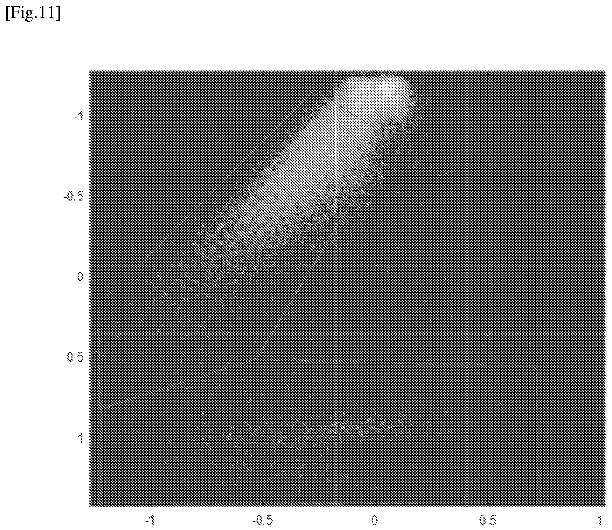

Enfin, dans une opération 230, le calculateur 12 utilise la liste de sites déterminée par le sélecteur 10, et exécute une fonction Class() dans laquelle des métriques sont calculées afin de produire une image permettant de distinguer les entre pixels de plaquettes des pixels de fond. Cette opération permet donc également de compter les PLT et d'estimer leur concentration. Les figures 10 et 11 montrent des images de classifications obtenues pour deux métriques distinctes.

La figure 3 représente un exemple de mise en œuvre de la fonction Focus() exécutée par le préparateur 6. Comme expliqué plus haut, le but de cette fonction est, à partir des images en z, de déterminer pour chaque pixel le plan de focus en z qui lui est le plus adapté. Pour cela, la Demanderesse a découvert qu'une mesure de parcimonie appliquée à un voisinage de points de chaque pixel permet d'obtenir des résultats inégalés. La mesure de parcimonie présente l'intérêt d'être adaptée aux objets pixelliques car elle cherche à maximiser le niveau d'un seul pixel au détriment de tous les autres. Plusieurs mesures de parcimonie existent, et la fonction Focus() décrite ici utilise une version modifiée de la mesure pq-mean (ou moyenne pq). La moyenne pq possède de bonnes propriétés théoriques tout en étant assez simple à calculer, ce qui permet de l'embarquer facilement dans une machine. Ainsi, dans l'exemple décrit ici, la mesure utilisée présente la formule suivante :

$$Pars(X) = 1 - \frac{\|G * X^p\|^{1/p}}{\|G * X^q\|^{1/q}}$$ où X représente un voisinage comprenant toutes les intensités autour d'un pixel donné, G est une fenêtre gaussienne qui vient s'applique aux intensités des pixels du voisinage, * désigne le produit de convolution, et p et q sont les paramètres de la mesure de parcimonie, avec $0 < p \le 1 < q$.

Dans l'exemple décrit ici, la Demanderesse a identifié que p=1/2 et q=3 donnent les meilleurs résultats. D'autres combinaisons offrent néanmoins de bons résultats, comme p=1/3 et q=4 ou p=1/2 et q=4. S'agissant de recherches pixelliques, la dimension du voisinage a été ici déterminée à partir de la gaussienne. Ainsi, en partant d'un écart-type de 2,5, pour une gaussienne couvrant 3 sigmas - ce qui représente l'approche classique - on obtient un voisinage de 17 pixels (3 fois 2,5 arrondi à 8, fois 2 plus le pixel central). D'autres dimensions de fenêtre gaussienne pourraient être retenues.

Ainsi, dans une première opération 300, un premier pixel courant cp est initialisé avec le premier pixel cp0 dans les coordonnées des images en z, puis dans une opération 310, une fonction Wind() récupère tous les voisins dans une fenêtre carrée de 17 pixels centrée sur le pixel cp et enregistre leurs intensités dans une variable W. La variable W reçoit les voisinages pour l'ensemble des images en z, de sorte que toutes les images en z sont traitées en une seule fois. En variante, les images en z pourraient être traitées séquentiellement ou en parallèle, et le choix du focus serait alors fait après tous ces calculs.

Ensuite, la mesure de parcimonie est calculée par une fonction Pars() dans une opération 320. Le résultat est stocké dans un tableau CP[] qui reçoit donc, pour chaque profondeur de focus z correspondant à une image en z, d'une part la mesure de parcimonie de pixel cp dans l'image en z considérée, et d'autre par l'intensité du pixel cp dans l'image en z considérée.

Le préparateur 6 exécute alors une fonction Max() dans une opération 330. La fonction Max() parcourt le tableau CP[] et retourne le coupe (z;I) (où I est l'intensité stockée dans le tableau CP[] pour l'image en z concernée) pour laquelle la mesure de parcimonie est la plus élevée. En effet, l'image en z pour laquelle la mesure de parcimonie est la plus élevée est l'image dans laquelle ce pixel a le meilleur focus. En variante, il serait possible de déterminer le z correspondant à l'intensité maximum en interpolant la courbe de valeurs I, et, le cas échéant interpoler des valeurs d'intensité dans ce plan pour la suite des calculs. Dans ce dernier cas, ce nouveau plan peut être introduit dans les données d'images en z, ou seul un voisinage du point considéré peut être retenu, ce voisinage étant décrit plus bas.

Le triplet (cp;z;I) est alors stocké dans un tableau FocImg[] dans une opération 340. Comme cela apparaît, le tableau FocImg[] contient toutes les informations de l'image de focus et est progressivement construit. Dans ce qui suit, le tableau FocImg[] pourra désigner l'image de focus.

Enfin, le prochain pixel est récupéré dans une opération 350, et la fonction Focus() reprend avec l'opération 310, sauf si tous les pixels ont été traités, auquel cas elle se termine dans une opération 399.

Dans ce qui précède, la fonction Focus() traite les pixels séquentiellement. Il va de soi qu'une version parallélisée de ce traitement est possible. Ainsi, l'image de focus FocImg[] présente un cadre de 8 pixels d'épaisseur dans lequel aucun z n'est identifié puisque toutes les mesures sont nulles. Cela a pour avantage de limiter les risques d'effets de bord. À la fin du traitement par le dispositif 2, c'est un cadre de 35 pixels d'épaisseur qui est retiré lors du comptage. Cela reste néanmoins négligeable devant les dimensions des images considérées (10 MP). La Demanderesse a également identifié que la moyenne pq n'est pas la seule mesure de parcimonie qui donne des résultats satisfaisants. Ainsi, la mesure de Gini (ou indice de Gini), couplée également à un fenêtrage gaussien est une variante faisant partie de la portée de l'invention.

La figure 4 représente un exemple de mise en œuvre de la fonction optionnelle Refine() exécutée mise en œuvre par le filtre 8. De fait, cette fonction est extrêmement proche de la fonction Focus(). Aussi, les opérations similaires ou identiques ont des numéros de référence dont seule le chiffre des centaines change, et seules les différences seront décrites.

La seule différence entre la fonction Focus() et la fonction Refine() réside dans la définition de la fenêtre de voisinage. Ainsi, dans l'opération 410, le filtre 8 exécute une fonction Wind2() qui définit la fenêtre W différemment. En effet, comme le but est de ne tenir compte que des voisins qui sont dans le même plan de focus que le pixel cp ou proche (par exemple à un plan près), la fonction Wind2() définit la fenêtre W de manière similaire à la fonction Wind(), mais, à chaque pixel, elle récupère la valeur z de ce pixel dans l'image de focus FocImg[], et écarte le pixel si ce z est distinct du z de l'image en z du pixel courant cp. Ainsi, pour chaque image en z, la mesure de parcimonie est raffinée pour chaque pixel avec les seuls pixels qui sont potentiellement pertinents.

La fonction Refine() peut être répétée jusqu'à ce qu'un seuil de modification des mesures de parcimonie soit atteint. En variante, cette fonction peut être répétée un nombre fixé de fois. La Demanderesse a découvert que 4 exécutions offrent le meilleur rapport entre améliorations et coût de calcul. Le gain principal offert par la fonction Refine() est l'amélioration du biais dans la régression linéaire de mesures par le dispositif 2. En effet, les tests sur bases de données existantes réalisés par la Demanderesse ont montré que le biais (ordonnée à l'origine de la régression linéaire) passe de 35 giga plaquettes par L à 24 giga plaquettes par L avec la fonction Refine(), ce biais étant idéalement de 0. Dans le cadre d'une utilisation embarquée, la fonction Refine() peut néanmoins être omise car son coût de calcul est très important. Le fenêtrage gaussien présente un intérêt moins marqué dans la fonction Refine() et il peut être relâché, de manière fixe ou progressive à chaque itération.

La figure 5 représente un exemple de mise en œuvre de la fonction Selct() exécutée mise en œuvre par le sélecteur 10. Maintenant que l'image de focus est déterminée, le but est d'identifier parmi les pixels ceux qui correspondent à des sites de plaquettes potentielles. Cela revient à effectuer une recherche de maximums locaux.

Ainsi, dans une première opération 500, un premier pixel courant cp est initialisé avec le premier pixel cp0 dans les coordonnées des images en z, puis deux opérations 510 et 520 sont lancées en parallèle. Dans l'opération 510, une fonction MaxLoc() détermine une valeur booléenne indiquant si le pixel courant cp constitue un maximum local dans l'image en z dont la profondeur est celle associée au pixel courant cp dans l'image de focus FocImg[]. Cela est réalisé par comparaison de l'intensité I du pixel courant cp à l'intensité de tous les pixels connexes. L'opération 520 est très proche, sauf que le voisinage est pris sur l'image de focus FocImg[] elle-même, et non plus l'image en z du focus du pixel courant cp. Ensuite, les valeurs m1 issue de l'opération 510 et m2 issue de l'opération 520 sont comparées avec un OU logique dans une opération 530. Ce test est donc positif si l'une des deux valeurs m1 et m2 vaut 1. En effet, deux pixels voisins n'ont pas nécessairement le même focus, et il est possible d'avoir des pixels qui sont maxima locaux sur l'image de focus mais pas sur l'image de leur plan de focus.

Si le test de l'opération 530 est positif, alors le pixel cp est ajouté dans une opération 540 dans un tableau SS[] de sites sélectionnés, puis un test dans une opération 550 détermine s'il reste des pixels courants à traiter. Si c'est le cas, la fonction Select() reprend avec les opérations 510 et 520 pour le nouveau pixel courant. Sinon, une fonction Sngl() est exécutée dans une opération 560. La fonction Sngl() sert à tenir compte du fait que, parmi les pixels sélectionnés, il arrive assez souvent que deux pixels soient sur la même particule. Par conséquent, une fois la liste SS[] arrêtée, la fonction Sngl() la parcourt pour identifier les couples de pixels directement voisins et sélectionnés, et conserve celui qui présente l'intensité la plus grande dans l'image de focus FocImg[]. Enfin, la fonction Select() se termine dans une opération 599.

Dans ce qui précède, la fonction Select() traite les pixels séquentiellement. Il va de soi qu'une version parallélisée de ce traitement est possible. De plus pour offrir une représentation parlante visuellement, la liste SS[] qui est émise en sortie peut être assimilée à une image de sites dans laquelle les sites sélectionnées ont une valeur 1 et les autres pixels une valeur nulle. Ici encore, l'image des sites et la liste SS[] pourront être utilisées de manière interchangeable ou conjointe, comme elles désignent la même chose. En variante, l'opération 560 pourrait être omise.

Une fois l'image des sites déterminée, il reste à appliquer une métrique permettant de classifier les pixels en tant que particules ou en tant que fond. La Demanderesse a procédé à des recherches extensives, et a identifié deux familles de métriques qui permettent de discriminer les particules.

La première famille est de nature gaussienne, et comprend deux métriques :

- une première métrique dans laquelle pour chaque site, un voisinage centré sur le site de dimensions 3x3 (en variante, une fenêtre 5x5, 7x7 ou autre peut être utilisée pour détecter des particules de tailles différentes) des intensités dans l'image en z associée au site dans l'image de focus FocImg[] est modélisé par une gaussienne dont l'inverse de l'écart-type constitue la métrique,

- une deuxième métrique dans laquelle pour chaque site, un voisinage de dimensions 3x3 des intensités dans l'image en z associée au site dans l'image de focus FocImg[] est modélisé par une gaussienne dont la hauteur constitue la métrique. En variante, la métrique peut également être basée sur la variance divisée par la hauteur.

Les figures 10 et 11 montrent comment ces deux métriques permettent de séparer PLT, GB et fond, avec des zones de séparation ajoutées.

La deuxième famille est basée sur le gradient en z. Dans cette version, le gradient en z est calculé pour chaque pixel d'un voisinage centré sur chaque site, de dimension 3x3, avec les intensités de ces pixels dans les images en z respectives, ce gradient étant évalué autour de la profondeur z associée au site dans l'image de focus FocImg[]. La métrique est alors définie comme la moyenne des gradients calculés.

À titre d'exemple, d'autres familles de métriques pourraient être envisagées. Notamment, des métriques pourraient être calculées sur des voisinages autres que des voisinages 3x3, et les métriques calculées sur ces voisinages pourraient être d'une autre nature que la modélisation par une gaussienne. On pourrait ainsi projeter les voisinages choisis sur différentes bases, telles que, de manière non exhaustive : la base des fréquences de la transformée de Fourier, une base formée par une suite de polynômes orthogonaux, une décomposition du voisinage en ondelettes.

Le dispositif et le procédé selon l'invention peuvent être utilisés sur d'autres types d'échantillons que l'on souhaite caractériser. Ces échantillons peuvent notamment comprendre un milieu dans lequel baignent des particules. Le milieu peut être un milieu liquide. Il peut comprendre un liquide corporel, obtenu par exemple à partir de sang ou d'urine ou de lymphe ou de liquide céphalorachidien. Il peut également s'agir d'un milieu de culture, comportant des nutriments permettant le développement de microorganismes ou de cellules. Par particule, on entend notamment, et de façon non exhaustive :

- une cellule, qu'il s'agisse d'une cellule de culture ou une cellule corporelle, par exemple une cellule sanguine ;
- un microorganisme, par exemple une bactérie ou une levure ou une microalgue ;
- une particule solide, par exemple une microbille, la microbille pouvant être fonctionnalisée, de façon à favoriser un greffage avec un analyte ; ou encore
- une particule formant une émulsion dans le milieu, en particulier une particule insoluble dans le milieu, un exemple étant une gouttelette lipidique dans un milieu aqueux.

**Revendications**

1. Dispositif de détection de particules en imagerie sans lentille, comprenant une mémoire (4) agencée pour recevoir une pluralité d'images en z obtenues à partir d'une imagerie sans lentille d'un échantillon biologique, un préparateur (6) agencé, à partir desdites images en z, pour déterminer une image de focus (FocImg[]) dans laquelle chaque pixel est associé d'une part à une image en z et d'autre part à l'intensité de ce pixel dans cette image en z, le préparateur (6) étant agencé pour déterminer l'image en z pour un pixel donné en calculant, pour chacune des images en z et pour le pixel donné, une mesure de parcimonie à partir de l'intensité du pixel donné et des intensités de pixels voisins, et en sélectionnant l'image en z dont la mesure de parcimonie est la plus importante, un sélecteur (10) agencé pour déterminer, pour chaque pixel de l'image de focus (FocImg[]), si ce pixel est un maximum dans un voisinage local centré sur ce pixel dans l'image de focus (FocImg[]) ou dans l'image en z associée à ce pixel dans l'image de focus (FocImg[]), et, si c'est le cas, pour stocker ce pixel dans une liste de sites sélectionnés (SS[]), et un calculateur (12) agencé pour calculer une valeur de métrique pour chaque pixel de la liste de sites sélectionnés basée sur l'intensité de ces pixels pour permettre de produire une image de valeurs de métriques permettant de distinguer les particules associées à chaque pixel de la liste de sites sélectionnés entre elles.

2. Dispositif selon la revendication 1, dans lequel le calculateur (12) est agencé pour mettre en œuvre une métrique étant choisie parmi une métrique basée sur la modélisation des intensités d'un voisinage de chaque pixel de la liste de sites sélectionnés dans l'image en z associée à ce pixel dans l'image de focus par une gaussienne, en combinant un ou plusieurs parmi la covariance, la hauteur et le facteur d'excentricité de cette gaussienne, et une métrique basée sur la moyenne des gradients en z de l'intensité des pixels d'un voisinage centré sur chaque pixel de la liste de sites sélectionnés, lequel gradient est évalué pour l'image en z correspondant à chaque pixel de la liste de sites sélectionnés dans l'image de focus (FocImg[]).

3. Dispositif selon la revendication 1 ou 2, dans lequel le préparateur (6) est agencé pour utiliser une mesure de parcimonie basée sur la moyenne pq où les intensités sont modulées par une fenêtre gaussienne centrée sur le pixel donné.

4. Dispositif selon la revendication 3, dans lequel le préparateur (6) est agencé pour utiliser une moyenne pq avec p égal à 1/2 et q égal à 3, un voisinage carré de 17 pixels, et une gaussienne d'écart-type égal à 2,5.

**5.** Dispositif selon l'une des revendications précédentes, dans lequel le sélecteur (10) est agencé pour parcourir la liste de sites sélectionnés, et, lorsque deux pixels sont immédiatement voisins, pour conserver celui dont l'intensité associée dans l'image de focus (FocImg[]) est la plus importante.

**6.** Dispositif selon l'une des revendications précédentes, comprenant en outre un filtre (8) agencé pour recalculer l'image de focus (FocImg[]) en recalculant la mesure de parcimonie pour chaque pixel donné en restreignant le voisinage de pixels à des pixels dont l'image en z associée dans l'image de focus (FocImg[]) est identique à celle associée au pixel donné ou immédiatement voisine en z.

**7.** Procédé de détection de particules en imagerie sans lentille, comprenant les opérations suivantes :

a) recevoir une pluralité d'images en z obtenues à partir d'une imagerie sans lentille d'un échantillon biologique,
b) déterminer une image de focus (FocImg[]) dans laquelle chaque pixel est associé d'une part à une image en z et d'autre part à l'intensité de ce pixel dans cette image en z, cette détermination étant réalisée, pour un pixel donné,
b1) en calculant, pour chacune des images en z et pour le pixel donné, une mesure de parcimonie à partir de l'intensité du pixel donné et des intensités de pixels voisins, et
b2) en sélectionnant l'image en z dont la mesure de parcimonie est la plus importante,
c) déterminer, pour chaque pixel de l'image de focus (FocImg[]), si ce pixel est un maximum dans un voisinage local centré sur ce pixel dans l'image de focus (FocImg[]) ou dans l'image en z associée à ce pixel dans l'image de focus (FocImg[]), et, si c'est le cas, pour stocker ce pixel dans une liste de sites sélectionnés (SS[]), et
d) calculer une valeur de métrique pour chaque pixel de la liste de sites sélectionnés basée sur l'intensité de ces pixels pour permettre de produire une image de valeurs de métriques permettant de distinguer les particules associées à chaque pixel de la liste de sites sélectionnés entre elles.

**8.** Procédé selon la revendication 7, dans lequel dans l'opération d), la métrique est choisie parmi une métrique basée sur la modélisation des intensités d'un voisinage de chaque pixel de la liste de sites sélectionnés dans l'image en z associée à ce pixel dans l'image de focus par une gaussienne, en combinant un ou plusieurs parmi la covariance, la hauteur et le facteur d'excentricité de cette gaussienne, et une métrique basée sur la moyenne des gradients en z de l'intensité des pixels d'un voisinage centré sur chaque pixel de la liste de sites sélectionnés, lequel gradient est évalué pour l'image en z correspondant à chaque pixel de la liste de sites sélectionnés dans l'image de focus (FocImg[]).

**9.** Procédé selon la revendication 7 ou 8, dans lequel l'opération b1) utilise une mesure de parcimonie basée sur la moyenne pq où les intensités sont modulées par une fenêtre gaussienne centrée sur le pixel donné.

**10.** Procédé selon la revendication 9, dans lequel l'opération b1) utilise comme mesure de parcimonie la moyenne pq avec p égal à 1/2 et q égal à 3, un voisinage carré de 17 pixels, et une gaussienne d'écart-type égal à 2,5.

**11.** Procédé selon l'une des revendications 7 à 10, dans lequel l'opération c) comprend parcourir la liste de sites sélectionnés, et, lorsque deux pixels sont immédiatement voisins, pour conserver celui dont l'intensité associée dans l'image de focus (FocImg[]) est la plus importante.

**12.** Procédé selon l'une des revendications 7 à 11, dans lequel l'opération b) comprend en outre b3) recalculer l'image de focus (FocImg[]) en recalculant la mesure de parcimonie pour chaque pixel donné en restreignant le voisinage de pixels à des pixels dont l'image en z associée dans l'image de focus (FocImg[]) est identique à celle associée au pixel donné ou immédiatement voisine en z.

**13.** Programme informatique comprenant des instructions pour exécuter le procédé selon l'une des revendications 7 à 12 lorsqu'il est mis en œuvre par ordinateur.

**14.** Support de stockage de données sur lequel est enregistré le programme informatique selon la revendication 13.

**Patentansprüche**

**1.** Vorrichtung zur Erkennung von Partikeln in der linsenlosen Bildgebung, umfassend einen Speicher (4), der dazu angeordnet ist, eine Mehrzahl von z-Bildern aufzunehmen, die aus einer linsenlosen Bildgebung einer biologischen Probe gewonnen wurden, einen Präparator (6), der dazu angeordnet ist, aus den genannten z-Bildern ein Fokusbild (FocImg[]) zu bestimmen, in dem jedes Pixel einerseits einem z-Bild und andererseits der Intensität dieses Pixels in diesem z-Bild zugeordnet ist, wobei der Präparator (6) dazu ausgelegt ist, das z-Bild für ein gegebenes Pixel zu bestimmen, indem für jedes der z-Bilder und für das gegebene Pixel ein Sparsamkeitsmaß aus der Intensität des gegebenen Pixels und den Intensitäten benachbarter Pixel berechnet wird und das z-Bild mit dem größten Sparsamkeitsmaß gewählt wird, wobei ein Selektor (10) dazu angeordnet ist, für jedes Pixel des Fokusbildes (FocImg[]) zu bestimmen, ob dieses Pixel ein Maximum in einer lokalen Nachbarschaft ist, die auf dieses Pixel im Fokusbild (Foc1mg[]) oder im z-Bild zentriert ist, das diesem Pixel im Fokusbild (Fochng[]) zugeordnet ist, und, wenn dies der Fall ist, dieses Pixel in einer Liste gewählter Stellen (SS[]) zu speichern, und einen Rechner (12), der dazu angeordnet ist, für jedes Pixel der Liste gewählter Stellen auf der Grundlage der Intensität dieser Pixel einen Metrikwert zu berechnen, um es zu ermöglichen, ein Bild von Metrikwerten zu erzeugen, mit denen die jedem Pixel der Liste gewählter Stellen zugeordneten Partikel voneinander unterschieden werden können.

2. Vorrichtung nach Anspruch 1, wobei der Rechner (12) dazu angeordnet ist, eine Metrik zu implementieren, die aus einer Metrik gewählt ist, die auf der Modellierung der Intensitäten einer Nachbarschaft jedes Pixels der Liste gewählter Stellen im z-Bild basiert, das diesem Pixel im Fokusbild durch eine Gauß-Verteilung zugeordnet ist, indem ein oder mehrere Faktoren aus Kovarianz, Höhe und Exzentrizitätsfaktor dieser Gauß-Verteilung kombiniert werden und einer Metrik, die auf dem Mittelwert der z-Gradienten der Intensität der Pixel einer Nachbarschaft basiert, die auf jedes Pixel der Liste gewählter Stellen zentriert ist, wobei der Gradient für das z-Bild evaluiert wird, das jedem Pixel der Liste gewählter Stellen im Fokusbild (FocImg[]) entspricht.

3. Vorrichtung nach Anspruch 1 oder 2, wobei der Präparator (6) dazu angeordnet ist, ein Sparsamkeitsmaß zu verwenden, das auf dem pq-Mittelwert basiert, wobei die Intensitäten durch ein Gauß-Fenster moduliert werden, das auf den gegebenen Pixel zentriert ist.

4. Vorrichtung nach Anspruch 3, wobei der Präparator (6) dazu angeordnet ist, einen pq-Mittelwert mit p gleich 1/2 und q gleich 3, eine quadratische Nachbarschaft von 17 Pixeln und eine Gaußsche Standardabweichung von 2,5 zu verwenden.

5. Vorrichtung nach einem der vorstehenden Ansprüche, wobei der Selektor (10) dazu angeordnet ist, die Liste der gewählt en Stellen zu durchlaufen und, wenn zwei Pixel unmittelbar benachbart sind, dasjenige beizubehalten, dessen zugehörige Intensität im Fokusbild (FocImg[]) am größten ist.

6. Vorrichtung nach einem der vorstehenden Ansprüche, die ferner einen Filter (8) umfasst, der dazu angeordnet ist, das Fokusbild (FocImg[]) neu zu berechnen, indem er das Sparsamkeitsmaß für jedes gegebene Pixel neu berechnet, indem er die Nachbarschaft von Pixeln auf Pixel beschränkt, deren zugehöriges z-Bild im Fokusbild (FocImg[]) identisch ist mit demjenigen, das dem gegebenen Pixel zugeordnet ist oder z unmittelbar benachbart ist.

7. Verfahren zum Erfassen von Partikeln in der linsenlosen Bildgebung, das die folgenden Schritte umfasst:

   a) Empfangen einer Mehrzahl von z-Bildern, die aus einer linsenlosen Bildgebung einer biologischen Probe erhalten wurden,
   b) Bestimmen eines Fokusbildes (FocImg[]), in dem jedes Pixel einerseits einem z-Bild und andererseits der Intensität dieses Pixels in diesem z-Bild zugeordnet ist, wobei diese Bestimmung für ein gegebenes Pixel durchgeführt wird,
   b1) durch Berechnen eines Sparsamkeitsmaßes für jedes der z-Bilder und für das gegebene Pixel aus der Intensität des gegebenen Pixels und den Intensitäten benachbarter Pixel, und
   b2) durch Auswählen des z-Bildes, dessen Sparsamkeitsmaß am größten ist,
   c) Bestimmen für jedes Pixel des Fokusbildes (FocImg[]), ob das Pixel ein Maximum in einer lokalen Nachbarschaft ist, die auf dieses Pixel im Fokusbild (FocImg[]) oder im z-Bild zentriert ist, das diesem Pixel im Fokusbild (FocImg[]) zugeordnet ist, und, wenn dies der Fall ist, Speichern dieses Pixels in einer Liste gewählter Stellen (SS[]), und
   d) Berechnen eines Metrikwertes für jedes Pixel der Liste gewählter Stellen auf der Grundlage der Intensität dieser Pixel, um ein Bild von Metrikwerten zu erzeugen, die es erlauben, die jedem Pixel der Liste gewählter Stellen zugeordneten Partikel voneinander zu unterscheiden.

8. Verfahren nach Anspruch 7, wobei in Schritt d) die Metrik aus einer Metrik gewählt wird, die auf der Modellierung der Intensitäten einer Nachbarschaft jedes Pixels der Liste gewählter Stellen im Bild z, das diesem Pixel im Fokusbild zugeordnet ist, durch eine Gauß-Verteilung basiert, indem eine oder mehrere aus Kovarianz, Höhe und Exzentrizitätsfaktor dieser Gauß-Verteilung und einer Metrik, die auf dem Mittelwert der z-Gradienten der Intensität der Pixel einer Nachbarschaft basiert, die auf jedes Pixel der Liste gewählter Stellen zentriert ist, wobei dieser Gradient für das z-Bild bewertet wird, das jedem Pixel der Liste gewählter Stellen im Fokusbild (FocImg[]) ent-

spricht.

9. Verfahren nach Anspruch 7 oder 8, wobei der Vorgang b1) ein Sparsamkeitsmaß verwendet, das auf dem pq-Mittelwert basiert, wobei die Intensitäten durch ein Gauß-Fenster moduliert werden, das auf den gegebenen Pixel zentriert ist.

10. Verfahren nach Anspruch 9, wobei der Schritt b1) als Sparsamkeitsmaß den Mittelwert pq mit p gleich 1/2 und q gleich 3, eine quadratische Nachbarschaft von 17 Pixeln und eine Gaußsche Standardabweichung von 2,5 verwendet.

11. Verfahren nach einem der Ansprüche 7 bis 10, wobei der erste Schritt c) das Durchlaufen der Liste gewählter Stellen umfasst und, wenn zwei Pixel unmittelbar benachbart sind, das Beibehalten desjenigen, dessen zugehörige Intensität im Fokusbild (FocImg[]) am größten ist.

12. Verfahren nach einem der Ansprüche 7 bis 11, wobei der Schritt b) ferner b3) das Neuberechnen des Fokusbildes (FocImg[]) durch Neuberechnen des Sparsamkeitsmaßes für jedes gegebene Pixel umfasst, indem die Nachbarschaft von Pixeln auf Pixel beschränkt wird, deren zugehöriges z-Bild im Fokusbild (FocImg[]) identisch ist mit demjenigen, das dem gegebenen Pixel zugeordnet ist oder in z unmittelbar benachbart ist.

13. Computerprogramm, umfassend Anweisungen zur Durchführung des Verfahrens nach einem der Ansprüche 7 bis 12, wenn es von einem Computer ausgeführt wird.

14. Datenspeichermedium, auf dem das Computerprogramm nach Anspruch 13 gespeichert ist.

**Claims**

1. A device for detecting particles by means of lensless imaging, comprising a memory (4) arranged to receive a plurality of z-stack images obtained from a lensless image of a biological sample, an initiator (6) arranged to determine, on the basis of said z-stack images, a focus image (FocImg[]) in which each pixel is associated, on the one hand, with a z-stack image and, on the other hand, with the intensity of this pixel in this z-stack image, the initiator (6) being arranged to determine the z-stack image for a given pixel by calculating, for each of the z-stack images and for the given pixel, a parsimony score on the basis of the intensity of the given pixel and on the intensities of neighbouring pixels, and by selecting the z-stack image for which the parsimony score is the highest, a selector (10) arranged to determine, for each pixel of the focus image (FocImg[]), whether this pixel is a maximum in a local neighbourhood centred on this pixel in the focus image (FocImg[]) or in the z-stack image associated with this pixel in the focus image (FocImg[]), and, if this is the case, to store this pixel in a list of selected sites (SS[]), and a computer (12) arranged to calculate a metric value for each pixel in the list of selected sites based on the intensity of these pixels to allow producing an image of the metric values allowing distinguishing the particles associated with each pixel in the list of selected sites from one another.

2. The device according to claim 1, wherein the computer (12) is arranged to implement a metric being chosen from a metric based on the modelling of the intensities of a neighbourhood of each pixel in the list of selected sites in the z-stack image associated with this pixel in the focus image by a Gaussian, by combining one or more of the covariance, the height and the eccentricity factor of this Gaussian, and a metric based on the mean of the z-gradients of the intensity of the pixels of a neighbourhood centred on each pixel in the list of selected sites, which gradient is evaluated for the z-stack image corresponding to each pixel in the list of selected sites in the focus image (FocImg[]).

3. The device according to claim 1 or 2, wherein the initiator (6) is arranged to use a parsimony score based on the pq mean where the intensities are modulated by a Gaussian window centred on the given pixel.

4. The device according to claim 3, wherein the initiator (6) is arranged to use a pq mean with p equal to 1/2 and q equal to 3, a square neighbourhood of 17 pixels, and a Gaussian of standard deviation equal to 2.5.

5. The device according to one of the preceding claims, wherein the selector (10) is arranged to browse the list of selected sites, and, when two pixels are immediate neighbours, to keep the one whose associated intensity in the focus image (FocImg[]) is the most significant.

6. The device according to one of the preceding claims, further comprising a filter (8) arranged to recalculate the focus image (FocImg[]) by recalculating the parsimony score for each given pixel by restricting the pixel neighbourhood to pixels whose associated z-stack image in the focus image (FocImg[]) is identical to that associated with the given pixel or immediately neighbouring in z.

7. A method for detecting particles by means of lensless imaging, comprising the following operations:

a) receiving a plurality of z-stack images obtained from a lensless image of a biological sample,

b) determining a focus image (FocImg[]) in which each pixel is associated, on the one hand, with a z-stack image and, on the other hand, with the intensity of this pixel in this z-stack image, this determination being carried out, for a given pixel,

b1) by calculating, for each of the z-stack images and for the given pixel, a parsimony score from the intensity of the given pixel and the intensities of neighbouring pixels, and

b2) by selecting the z-stack image for which the parsimony score is the highest,

c) determining, for each pixel of the focus image (FocImg[]), whether this pixel is a maximum in a local neighbourhood centred on this pixel in the focus image (FocImg[]) or in the z-stack image associated with this pixel in the focus image (FocImg[]), and, if this is the case, to store this pixel in a list of selected sites (SS[]), and

d) calculating a metric value for each pixel in the list of selected sites based on the intensity of these pixels to allow producing an image of the metric values allowing distinguishing the particles associated with each pixel in the list of selected sites from one another.

8. The method according to claim 7, wherein in operation d), the metric is selected from a metric based on modelling the intensities of a neighbourhood of each pixel in the list of selected sites in the z-stack image associated with this pixel in the focus image by a Gaussian, by combining one or more of the covariance, height, and eccentricity factor of this Gaussian, and a metric based on the mean of the z-gradients of the intensity of the pixels of a neighbourhood centred on each pixel in the list of selected sites, which gradient is evaluated for the z-stack image corresponding to each pixel in the list of selected sites in the focus image (FocImg[]).

9. The method according to claim 7 or 8, wherein operation b1) uses a parsimony score based on the pq mean where the intensities are modulated by a Gaussian window centred on the given pixel.

10. The method according to claim 9, wherein operation b1) uses the pq mean as a parsimony score, with p equal to 1/2 and q equal to 3, a square neighbourhood of 17 pixels, and a Gaussian of standard deviation equal to 2.5.

11. The method according to one of claims 7 to 10, wherein operation c) comprises browsing the list of selected sites, and, when two pixels are immediately neighbours, to keep the one whose associated intensity in the focus image (FocImg[]) is the most significant.

12. The method according to one of claims 7 to 11, wherein operation b) further comprises b3) recalculating the focus image (FocImg[]) by recalculating the parsimony score for each given pixel by restricting the pixel neighbourhood to pixels whose associated z-stack image in the focus image (FocImg[]) is identical to that associated with the given pixel or immediately neighbouring in z.

13. A computer program comprising instructions for executing the method according to one of claims 7 to 12 when implemented by computer.

14. A data storage medium on which the computer program according to claim 13 is recorded.

[Fig.1]

[Fig.2]

[Fig.3]

[Fig.4]

[Fig.5]

[Fig.6]

[Fig.7]

[Fig.8]

[Fig.9]

[Fig.10]

[Fig.11]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3034196
- FR 3049348
- FR 3049347
- FR 3082943
- US 2016041094 A1
- FR 3082944

**Littérature non-brevet citée dans la description**

- Unconventional methods of imaging: computational microscopy and compact implementations. **MCLEOD et al.** Reports on Progress in Physics. Institute of Physics Publishing, 23 May 2016, vol. 79, 76001
- Comparing Measures of Sparsity. **HURLEY et al.** IEEE Transactions on Information Theory. IEEE, 10 October 2009, vol. 55, 4723-4741